(19) **Europäisches Patentamt**

**European Patent Office**

**Office européen des brevets**

(11) Publication number : **0 294 383 B1**

(12) # EUROPEAN PATENT SPECIFICATION

(45) Date of publication of patent specification :
03.07.91 Bulletin 91/27

(51) Int. Cl.$^5$ : **B65G 65/06, B65G 47/16, A01D 90/12, A23N 17/00, A01D 91/00**

(21) Application number : 87901708.5

(22) Date of filing : 16.02.87

(86) International application number :
PCT/SE87/00072

(87) International publication number :
WO 87/04995 27.08.87 Gazette 87/19

(54) **EQUIPMENT FOR THE HANDLING OF CROP MATERIAL**

(30) Priority : 21.02.86 SE 8600790

(43) Date of publication of application :
14.12.88 Bulletin 88/50

(45) Publication of the grant of the patent :
03.07.91 Bulletin 91/27

(84) Designated Contracting States :
AT BE CH DE FR GB IT LI LU NL SE

(56) References cited :
DE-A- 1 582 429
DE-A- 1 945 057
DE-A- 1 963 418
DE-A- 2 058 595
DE-A- 2 151 653
DE-A- 2 343 667

(56) References cited :
DE-B- 2 151 116
GB-A- 1 169 406
GB-A- 1 236 266
SE-A- 184 849

(73) Proprietor : **DE ROTTERDAMSCHE DROOGDOK MAATSCHAPPIJ B.V.**
**Heijplaatstraat 21 Postbus 913**
**NL-3000 AX Rotterdam (NL)**

(72) Inventor : **BRUNER, Hasse**
**PI 2018 Rackekarr**
**S-544 00 Hjo (SE)**
Inventor : **PERSSON, Lars-Inge**
**Nygardavagen 35**
**S-263 00 Höganäs (SE)**

(74) Representative : **Hynell, Magnus**
**Hynell Patenttjänst AB Box 236**
**S-683 02 Hagfors (SE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### The Technical Field

The present invention relates to a crop material equipment. The present invention relates more specifically to an equipment for treatment of a chopped crop material in the field or in connection with the harvest place or with a provisional receiving or storing facility.

### The Background of the Invention

To harvest all the crop is a new yet old method designed to utilize all valuable ingredients of the crop material, i.e. not solely the grains but also the straw, the leaves and the chaff. In its modern variety this technique involves a chopping of all the plant, except the root system and a short stubble, directly in the harvester. The chopped material is accumulated in a container on a loading vehicle, which is hauled by the harvester or is mounted on the latter. When the container is filled, it is either transported to a center, in which the chopped material is separated into its various component parts, which may be treated in various ways, or to a storing facility, which normally is situated close to the harvest place. In this "barn" or storing facility the crop material is stored, until it is transported to a central treatment facility. Thus, the storing facility is used as a "satellite" of the central treatment facility, in which the crop material, after the separation into its component parts, can be improved to a high degree. By means of the system of a plurality of "satellites", which serve a central processing facility, the latter may achieve a very high ratio of production to capacity, which is important in order to achieve a satisfactory total economy in the system.

However, in order to achieve a satisfactory total economy the work in the "satellite" must also be conducted in a judicious manner. Also, the satellites must be mobile, which means that it must be easy to move the equipment and position it close to those fields, which are to be served during the current cultivation period. However, qualified equipments designed for a well balanced dosage of chemicals to the crop material have so far been used only in stationary facilities, which cannot be used in a system requiring a high degree of mobility.

### A Brief Description of the Present Invention

The object of the present invention is to suggest an equipment, which solves the above-described problem better than known equipments. This object is achieved in accordance with the present invention by means of an equipment, which comprises two separate mobile units, namely a loading vehicle having a container for the crop material as well as a mobile device for dosage of chemicals or other additives to the crop material, in that said two units are designed to be docked to an integrated handling unit, which can be viewed as a stationary facility as long as the two units are docked to each other, that one of the gables faces the dosage device, that the container can be opened in said gable, the latter thereby forming a discharge opening for the crop material, and that it is provided with a device for feeding the crop material through said discharge opening, that said dosage device is provided with an input portion, which faces said docked container and includes a first conveyor for the crop material discharged from said container, that said input portion of said dosage device comprises at least two lateral walls, that said container, docked with said dosage device, said lateral walls as well as said first conveyor define a space between the container and the first conveyor, which space is closed, at least laterally and has a bottom formed by said first conveyor, that a stripper for the crop material, when it is fed upwardly by means of said first conveyor, is provided in the upper portion of said space at a distance from said conveyor, so that the input portion feeds an even volumetric crop material flow into the dosage device, that a level guard is provided in this space between the container and the stripper, the level guard being provided to manually or automatically controll the discharge device, so that the latter is stopped or is driven with a slower working speed, in case the space between the container and said first conveyor of said dosage device is filled with crop material, so that said level guard is activated. Said input portion of said dosage device and the first conveyor preferably have the same width as the container.

Another object of the present invention is that the loading vehicle is equipped in such a fashion that the device which is used to feed the crop material through the discharge opening also can be used for compacting the crop material in connection with the accumulation of the crop material in the loading vehicle out in the field. Thus, the equipment must be adapted to the requirements of the mobile dosage unit as well as to the crop work, so that the capacity of the dosage facility can be adapted to the capacity of the harvester, a maximal utilization of harvesters, loading vehicles and said dosage device being possible. Consequently, the container is provided with a discharge device, which includes a mobile wall, which is disposed between the longitudinal walls of the container and between the bottom of the container and up to a level, which corresponds to at least the main portion of the total height of the container, displacement devices being provided in order to displace the movable wall from a forward end position backwards towards the discharge opening in order to move the whole amount of crop material in the container backwards towards the discharge opening, so that the crop material gradually is forced to be discharged from the container in the shape of a more or less continuous body. The first conveyor in the dosage device extends from a lower level, which is placed lower than the bottom of the container, and up to an upper level, which is placed considerably higher than the bottom of the container, while the level guard is placed at a level between the bottom and the ceiling of the container.

Although the movable wall of the container can be designed in various ways, it is preferred that the lower portion of the movable wall slopes downwards backwards, i.e. acts as a wedge facing the rear end wall of the container and the discharge opening, when the rear wall is opening, respectively. A suitable angle of inclination is 35°-55°, whereas the upper portion of the movable wall ought to be substantially vertical. Other wall configurations are possible, which in their lower portion forms a wedge and which in their upper portion are more or less vertical or at least very steep. Plane wall surfaces are preferred for several reasons, but curved surfaces can be used, e.g. concave surfaces facing the discharge opening/doors. Due to the rearward movement of the movable wall, regardless of its shape, the pressure of the crop material increases, partly against the upper portion of the wall, partly against the lower slanting portion, and thus a force vector results, which prevents the wall from being forced back towards the forward portion of the container due to the counter pressure of the crop material, when the displacement devices exert their force on the movable wall close to the bottom of the container

The movable wall suitably is placed on a sledge or a carriage, which can slide and roll respectively on the bottom of the container and is not provided with a floor of a base. This sledge or carriage can be designed as a U-shaped frame with its opening facing backwards. When the movable wall has been moved to its forward end position the displacement devices, which are designed as a hydraulic package, are disposed below the slanting wall portion, between the two legs of the frame. In order to additionally ensure that the movable wall does not tip due to the weight of the crop material, when the sledge/carriage is moved rearwards in the container, a strip or similar outstanding device suitably is disposed along the two longitudinal walls of the container, in parallell with the bottom, as a distance of about 25-30 mm above the sides of the sledge/carriage.

The movable wall or at least its lower slanting portion can also be made revolving in relation to the sledge/carriage, so that the wall can rotate about a hinge in the foot point on the sledge/carriage. Also, in this connection displacement devices can be disposed in order to turn the wall increasingly backwards towards the discharge opening, when the movable wall has reached its rear end position in order to tip possible remaining amounts of the crop material, which have not slided out along the slanting wall in spite of a suitable coating of a low friction material on its surface. As an alternative the lower portion of the wall can be rotated around said hinge by pressing the lower edge of the wall against a stop means, while at the same time the displacement devices of the sledge or wall push the wall increasingly a distance forward.

The displacement of the movable wall forward and backward in the container can as a principle be accomplished by means of various types of displacement devices, such as forced screws, wire winches, gear-rack-transmissions or hydraulic cylinders. It is suitable to use, according to a preferred embodiment, a group of hydraulic cylinders, connected in series and in pairs and supported by the bottom of the container, the rod pistons of the consecutive hydraulic cylinder stages thus being alternatingly turned forward towards the front end of the container and backward towards the movable wall respectively. In at least every stage, which follows the first one, in relation to the front end of the container, are included, according to a selected embodiment, two parallell hydraulic cylinders, the cylinders of every succeeding stage being disposed outside the cylinders of the preceding stage. The first stage has a fastening point in the container and the last stage two fastening points attached to the movable wall or rather to the sledge, on which the wall is mounted, so that the connecting lines between the three fastening points form an equally sided triangle, when the hydraulic rods are maximally projected, i.e. are placed in their plus positions, and the movable wall is placed in its rear end position, the base of the triangle being turned towards the movable wall an its point being turned towards the front end of the container. It is possible to attain the same speed in the different stages, which is particularily advantageous, when the container is to be connected directly to a succeeding device for dosage of additives to the crop material. The hydraulic package turns very compact, when it is brought together, which means that it is accomodated inside the space, which is available below the slanting portion of the movable wall between the two sides of the sledge/carriage. Also, a very favorable distribution of the forces on the sledge/carriage is attained by means of the triangular force system, which in addition to the construction for the rest contributes to preventing the creation of a drawer effect. In order to attain very long stroke lengths and simultaneously a short hydraulic package, when it is brought together, a clamp-shaped yoke can be connected between at least two of the consecutive cylinder pairs, which yoke connects the piston rods of one of these cylinder pairs with the piston rods of the other one of said cylinder pairs. When the hydraulic package is compressed, i.e. when the pistons are placed in their minus positions, the cylinders and said yoke form a tight hydraulic package, the yoke and the connecting elements being disposed between the adjacent consecutively coupled cylinders, which are connected to each other by means of the yoke, the cylinders contacting sliding surfaces on said connecting elements.

When the container and the dosage device are docked together, the space between the container and the dosage device is laterally difined by a pair of lateral walls on the dosage device. The bottom of the space is formed by said first conveyor but it is open upward. A stripper for crop material, which is discharged by the discharge device in the container and which gradually is fed upward by the first conveyor, is mounted in the upper portion of said space at a distance from the conveyor, so that from the input portion an even volumetric flow of crop material is fed into the device. The first conveyor suitably is an endless conveyor belt having roughly the same width as the container, which conveyor belt slants upward/inward in the dosage device.

Additional characteristic features of the integrated equipment and of the two units, which are parts of the same, i.e. the loading vehicle and its container and the discharge device as well as the dosage device and its conveyors, are stated in the patent claims as well as in the following description of a preferred embodiment.

A Brief Description of the Drawings

In the following description of a preferred embodiment reference is made to the enclosed drawings, in which :

Figure 1 shows a harvester and a loading vehicle mounted on it, the exterior features of which are known but which as to its interior can be equiped according to the present invention ;
Figure 2 is a side elevational view of the loading vehicle ;

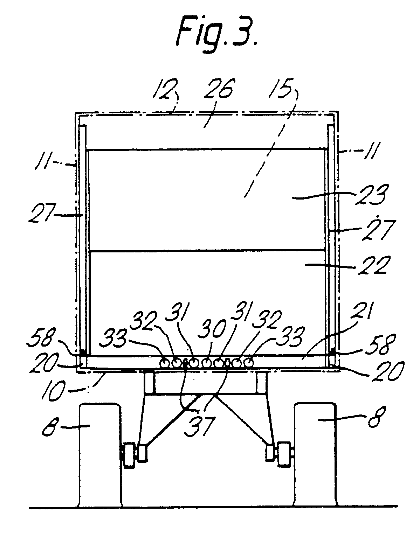

Figure 3 shows the interior features in a view along line III-III in Figure 2 ;
Figure 4 is a top view of a hydraulic package in the loading vehicle, when it is brought together ;

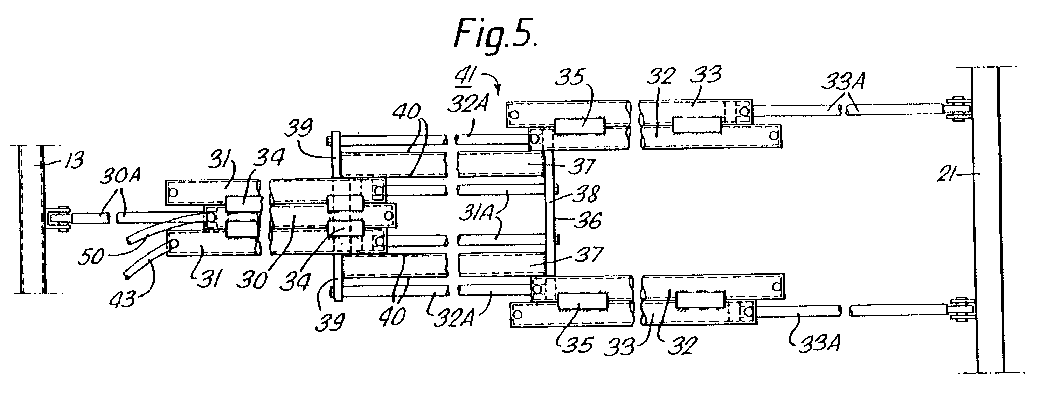

Figure 5 shows the same hydraulic package, when it is maximally expanded ;
Figure 6 is perspective view showing the movable wall, the sledge and the hydraulic package in the front end position ;
Figure 7 is a perspective view of the loading vehicle, which is being backed by a tractor, to be docked to a dosage device, which is connected to a storage facility for the treated crop material ;
Figure 8 is a top view of the dosage device and the rear portion of the container, which is docked to the dosage device ;
Figure 9 is a side elevational view along line IX-IX in Figure 8 ;
Figure 10 shows the dosage device from its rear side in a view X-X in Figure 8 ; and
Figure 11 shows diagrammatically an alternative embodiment of the movable wall shown in Figure 6.

A Description of a Preferred Embodiment

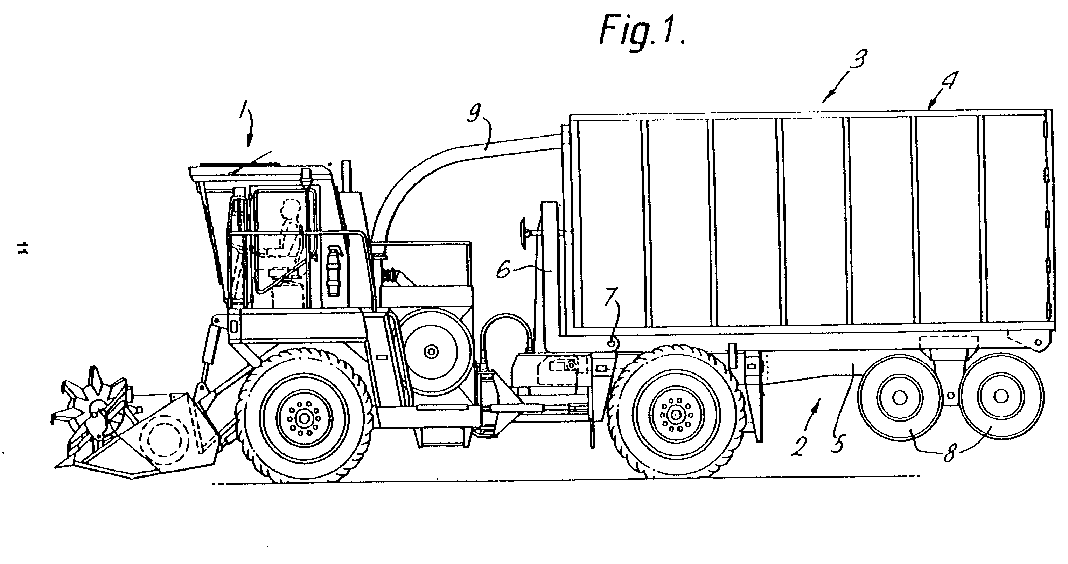

Figure 1 shows a harvester 1. Its rear portion is provided with a loading shifter 2 and on the latter is a loading vehicle 3 mounted, which comprises a container 4 on a loading vehicle frame 5, which can be transformed into a trailer. To accomplish this a post 6 can be bent down by rotating it about a hinge 7 and the loading vehicle frame is provided with two pairs of wheels in its rear end. The crop material can be fed from harvester 1 to container 4 through an air blow duct 9 in a way known per se.

Container 4 comprises a plate bottom 10, fully covering longitudinal walls 11, a fully covering roof 12, which is fastened to longitudinal walls 11, transverse beams 13 in the front end, which are extended between longitudinal walls 11 and hold together the container, and doors 14 in the rear end. Doors 14 can be two conventionally designed doors, which manually can be opened and shut by turning in hinges 16 about vertical axes of rotation. As an alternative one or several doors can be provided, which can open and shut automatically output opening 15 in the rear end of the container. In this instance a folding door is suitably used, which is folded upwards.

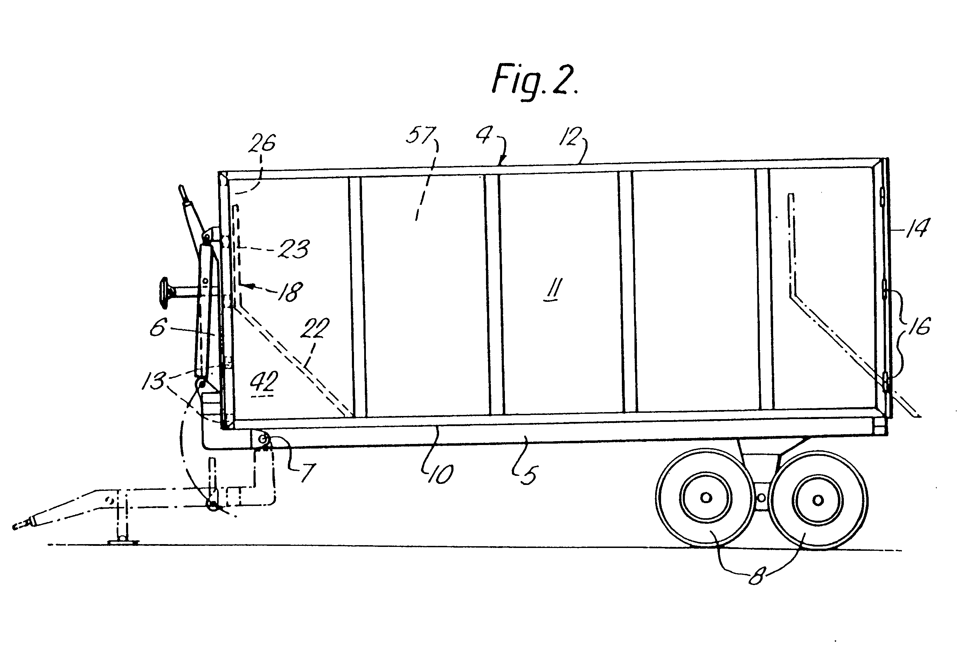

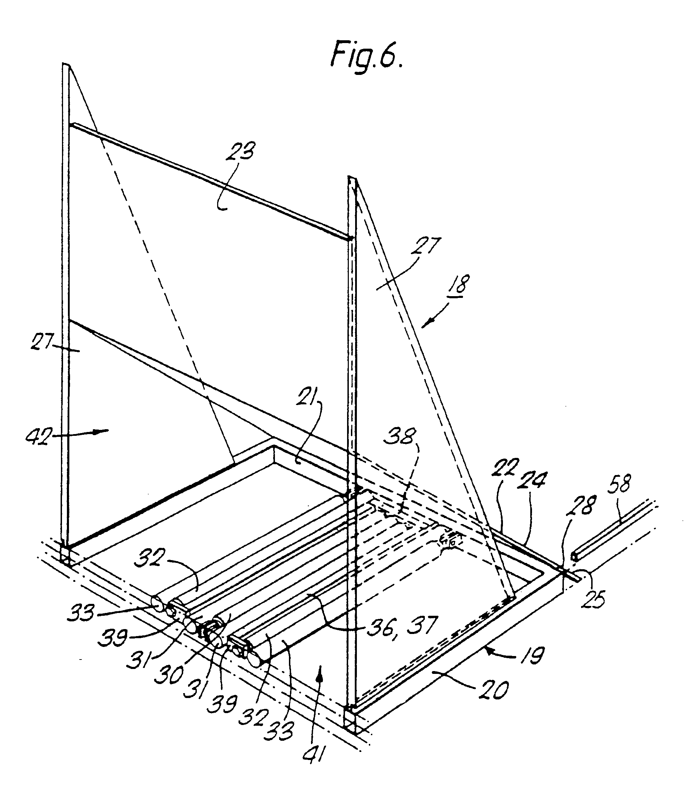

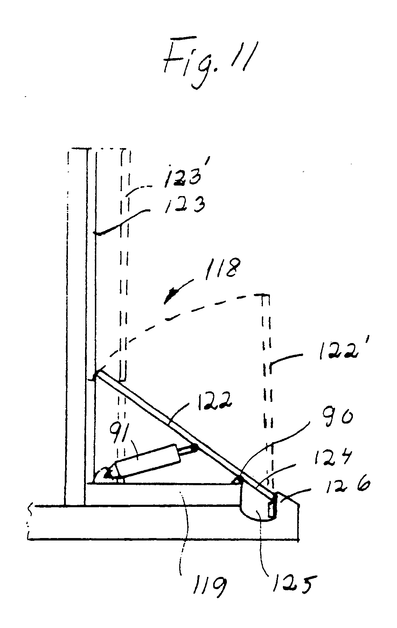

Inside container 4 a movable wall 18 is provided, which is mounted on and fastened to a sledge 19, which is disposed on and can be moved on bottom 10 of the container. Sledge 19 consists of two lateral beams 20 and one transverse beam 21. The three beams 20, 21 are joined to a U-shape. The sledge does not have a bottom. Lateral beams 20 abut longitudinal walls 11 in the corners between bottom 10 and the longitudinal walls. Wall 18, which can be moved in container 4 and is mounted on sledge 19, is extended transversely between the two longitudinal walls 11. Wall 18 consists of a lower portion 22, which is inclined, and an upper portion 23, which is vertical and is an extension of the lower portion. Lower portion 22 is inclined with an angle of 45° against bottom 10 and is on its upper side coated with a low friction material 24. The inclined portion 22 is extended to container bottom 10 having a point 25 in front of transverse beam 21. Upper vertical wall portion 23 is extended from about half the height of the container up to a level of about 400 mm below the interior surface of roof 12 of the container. Thus a gap-shaped opening 26 results between the upper edge of wall 18 and roof 12. When loading vehicle 3 is mounted on loading shifter 2, Figure 1, and sledge 19 and wall 18 are in their front end position, Figure 2, air blow duct 9 is extended into this gap-shaped opening 26 in order to blow the crop material into container 4 in space 57 between movable wall 18 and doors 14 in the output end. Wall 18 can be either fastened to sledge 19, according to the embodiment shown in Figure 6, or rotatable in relation to the same about a horizontally disposed hinge 90, as is shown in the diagrammatically depicted embodiment in Figure 11, in which the sledge has reference numeral 119, the lower wall portion 122 and the upper vertical wall portion 123. In the previous embodiment, Figure 6, the two portions 22 and 23 of wall 18 have been welded with a gable wall 27 on either lateral beam 20. In the subsequent embodiment, Figure 11, displacement devices, e.g. hydraulic cylinders 91, can be disposed between sledge 119 and lower wall portion 122 in order to rotate the latter about hinge 90, which suitably is disposed adjacent to the upper edge of sledge 119. In this embodiment, Figure 11, wall portions 122 and 123 are not fastened to each other, but instead wall portion 122 rests in its normal position with its upper edge against vertical portion 123 and is pressed against the latter by the material in the container. In order to be able to turn rotatable wall portion 122 about hinge 90 without lower portion 124 of the wall hitting the floor of the container or other obstacles a recess 125 can be made. In Figure 11 a stop means has reference numeral 126. Since the rear edge of wall 122 is pressed against stop means 126, wall 122 can be rotated about hinge 90 without additional displacement devices 91, if the movement to the right of sledge 119 is continued some distance from the position of vertical wall portion 123 (indicated by continuous lines) to a position called 123'. The final position of movable wall portion 122 has been indicated by position 122'.

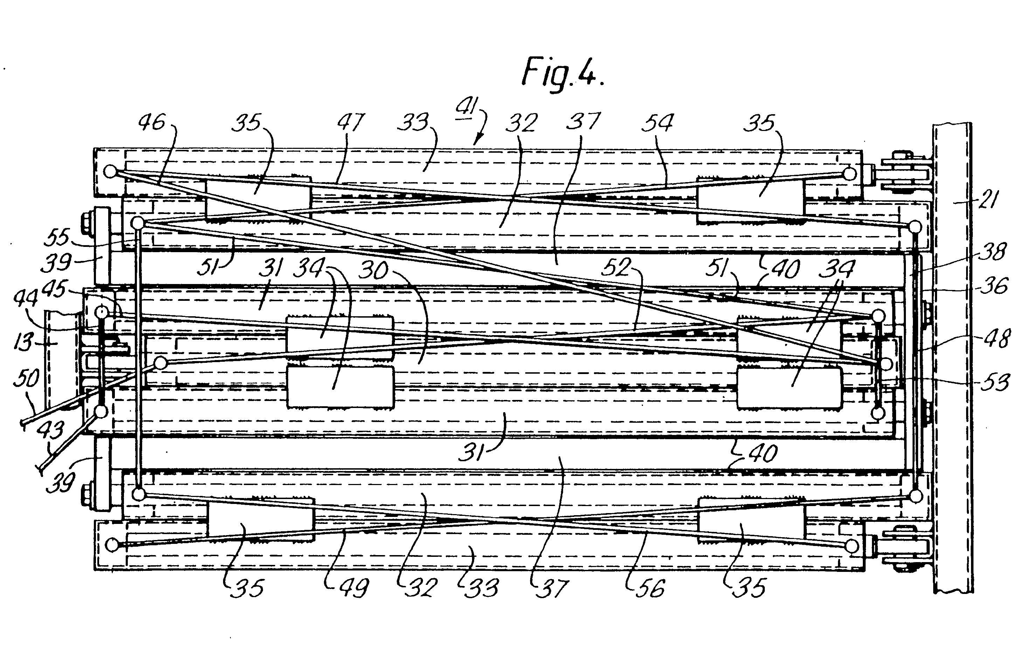

The displacement devices used to move sledge 19 and thus wall 18 in the container are hydraulic cylinders in a plurality of hydraulic cylinder stages I, II, III, IV in series. In every stage II-IV there is two cylinders in parallell 31, 32 and 33 respectively, which are identical, i.e. have the same length and the same piston area. Hydraulic cylinder 30 in first stage I has the same length as the rest but its piston area is suitably twice as large. As an alternative also this stage includes two cylinders connected in parallell and is identical with the rest. Piston rod 30A in first stage I is fastened to the mid-portion of the lowest one of transverse beams 13 in the front end of the container. The exterior of cylinder 30 is by means of plates 34 welded to the two hydraulic cylinders 31 in the second stage. The piston rods 31A in this second cylinder stage are turned in the opposite direction in relation to said first piston rods 30A and are connected to a yoke 36. Yoke 36 is shaped as a clamp and is provided with connection elements 37, which consist of box girders, one on each side outside said second hydraulic cylinders 31. Elements 37 connect foremost fastening plate 38 of yoke 36 (to which piston rods 31A are connected) to two rearmost fastening plates 39, which extend transversely outward and are connected to piston rods 32A belonging to said third hydraulic cylinders 32. Connecting elements 37 are on their surfaces provided with low friction coatings 40. Cylinders 31 and 32 abut and slide against these low friction coatings 40, when hydraulic assembly 41 is expanding. In this hydraulic assembly are finally included hydraulic cylinders 33 in the fourth stage. In the same way as cylinders 30 and 31 are connected to each other by means of plates 34 cylinders 32 and 33 are welded to each other via plates 35. Cylinders 33 are turned in the opposite direction in relation to cylinders 32. Piston rods 33A are connected to transverse beam 21 in sledge 19. When hydraulic assembly 41 is brought together maximally, Figures 4 and 6, there is enough space for it in space 42 below inclined portion 22, between the two lateral beams 20 of sledge 19, where hydraulic cylinders 30-33 and yoke 36 with its connection elements 37 are disposed directly against bottom 10 of container 4.

All hydraulic cylinders 30-33 are double-acting. From a hydraulic pump, not shown, a first hydraulic duct 43 leads to the plus chamber of one of the two other hydraulic cylinders 31 and from there via first and second hydraulic tubes 45 to the plus chamber of first hydraulic cylinder 30. From the plus chamber of first cylinder 30 a second hydraulic duct 46 leads to the plus chamber of one of said fourth hydraulic cylinders 33 and from there a third, a fourth and fifth hydraulic tube 47-49 leads to the plus chambers of the rest of hydraulic cylinders 32 and 33 respectively. I an analogous way third and fourth hydraulic ducts 50,51 and sixth – tenth hydraulic tubes 52-56 are connected to and connecting the minus chambers of the same hydraulic cylinders 30-33.

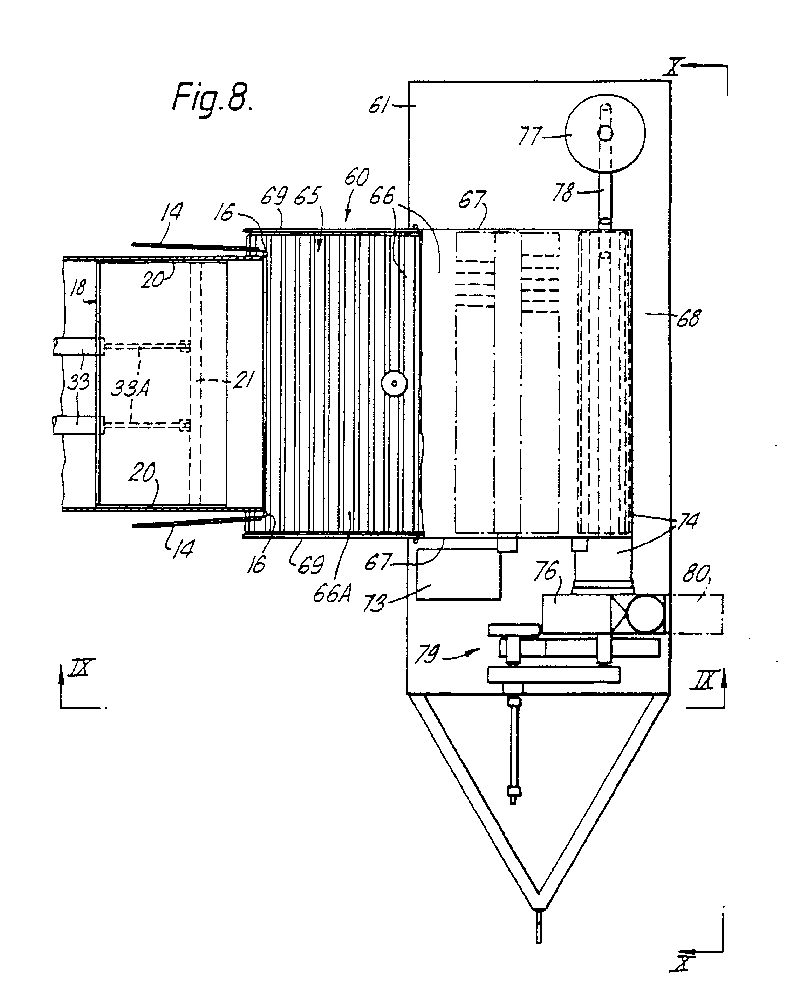

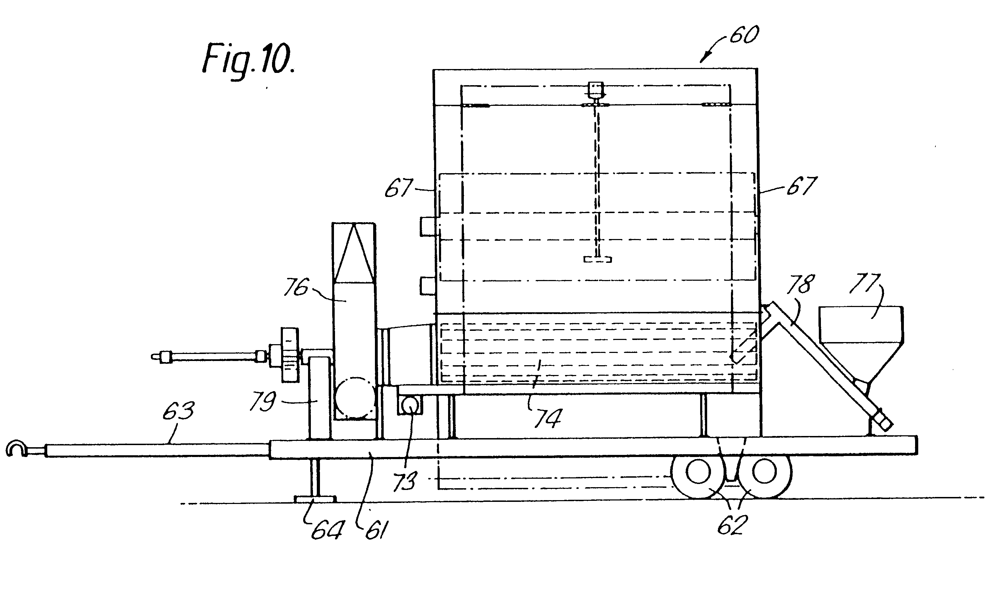

The dosage device generally has reference numeral 60 and will be described now, reference being made to Figure 8-10. It is mobile like loading vehicle 3 and mounted on a carriage 61 having wheels 62, a carriage beam 63 as well as upright members 64 for temporary placing of the assembly.

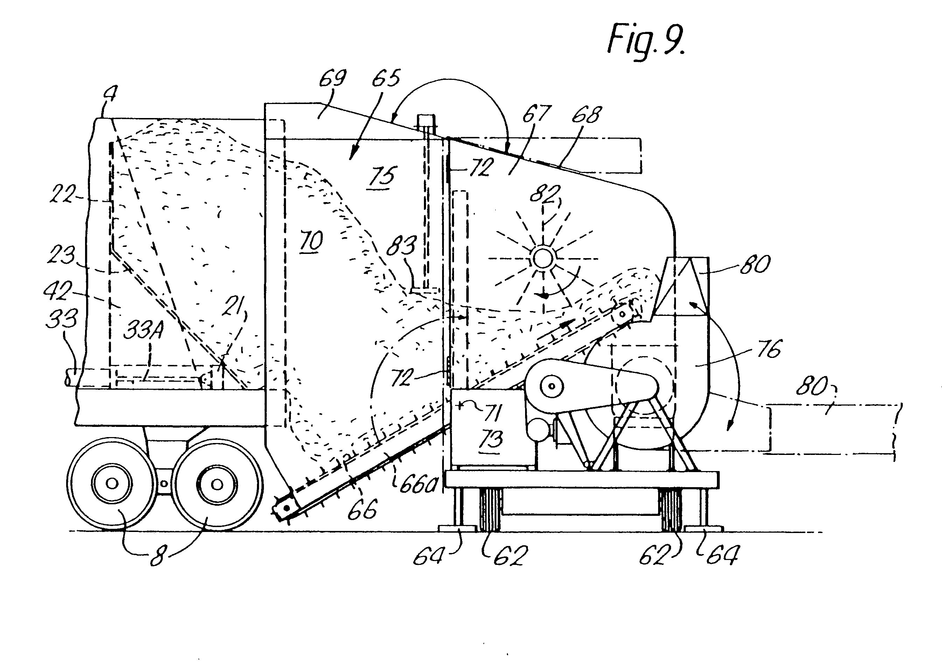

An input portion for crop material 70 has a reference numeral 65. The bottom of input portion 65 consists of an input conveyor, also called first conveyor, which consists of an endless conveyor belt, which slants upwards into dosage device 60 in the working position of the equipment. The foremost, lower portion 66A can be erected into a vertical position about a shaft 71, as is shown by the dotted lines in Figure 9. Portion 66A is moved into this position, when device 60 is transported or is put aside for quite a long time. Input portion 65 is laterally limited by two substantially triangular lateral walls 67, which by hinges 72 are connected to two doors 69, which from a transport position, when they are closed, in order to shut the interior of device 60, can be let out in order to place them in parallell with lateral walls 67. In this position they are extensions of said lateral walls 67 and contributes substantially to defining the receiving room for crop material 70 in input portion 65. A roof 68 connects lateral walls 67. Input conveyor 66 is driven hydraulically via shaft 71. The hydraulic equipment of the device generally has a reference numeral 73. It is also possible to let forward a roof portion above the forwardly turned portion of the input conveyor in order to get a completely closed space.

Behind input conveyor 66 and at a lower level than its upper portion there is a second, transverse conveyor 74, which can be a screw feeder. The latter leads to a fan 76. A powder feeder 77 is mounted on the other end of carriage 61. From this powder feeder a duct 78 leads to the second conveyor 74 for a volumetric dosage of a chemical to the crop material. Driving and transmission means for fan 76 generally has the reference numeral 79. Fan 76 is connected to a duct 80, which leads to a storage facility 81, which in this embodiment is a very large tent.

The integrated functions of the previously described devices are to be described as follows. Firstly, how loading vehicle 3 functions on the crop field will be explained a little. When harvester 1 is moved along the field to be harvested, the crop material is blown into space 57 behind wall 18 by air blower duct 9, the point of which is extended into gap-shaped opening 26 between the upper edge of wall 18 and the ceiling of the container. The driver knows by experience how long a so called pull is (a pull is that distance, which he must move the harvester in order to fill the container). While doing a pull the crop material ordinarily is compressed once or several times. In case the crop material is composed of full grains in a chopped condition, it is sufficient to compress the crop material once by means of movable wall 18. In case it is dry hay, it may be more suitable to make several compression strokes, while a green mass should not be compressed at all, since it then will become too heavy. The compression strokes are suitably made, when the equipment turns at the end of the field. When hydraulic oil is fed through first hydraulic duct 43, hydraulic rods 30A-33A are extended, so that the system of cylinders and piston rods increasingly attains the shape of an equally sided triangle, its point being placed in lower beam 13 in the front end of container 4 and its base in transverse beam 21 of sledge 19. During the extension movement cylinders 31 and 32 slide against low friction coatings 40 on connection elements 37 of yoke 36. This contact and sliding is important for the stiffness of the construction as is the case with the triangular force system, which has a stabilizing influence on sledge 19, 119 and contributes to a prevention of a drawer effect.

During the compression strokes doors 14 are closed. Wall 18 pushes the crop material in front of it towards said closed doors, the lower inclined portion 22 and 122 respectively being pushed like a wedge below the crop material. Increasingly the counter pressure of the crop material mounts against wall 18. The pressure on vertical upper wall portion 23 and 123 respectively tends to tip wall 18 counterclockwise (see Figure 2), i.e. against the front end of the container, while the pressure against inclined portion 22, 122 pushes sledge 19, 119 downwards against the floor and prevents its tipping. In order to further see to it that sledge 19, 119 does not tip while being influenced by the counter pressure of the crop material, a longitudinal list 58, which projects into the container, is mounted on each lateral wall about 25-30 mm above sledge 19, 119. When the crop material has been compressed to the desired degree all of the hydraulic pistons are returned by hydraulic oil instead being fed to the minus chambers through tube 50. In this way the process can be repeated, until the container 4 has been filled with the desired amount of crop material.

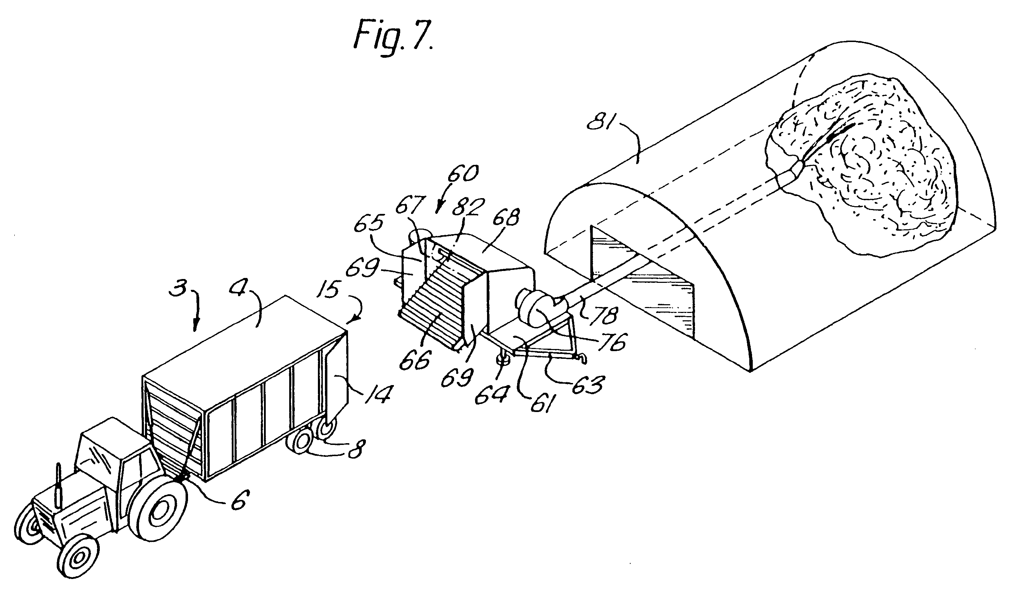

When container 4 has been filled with the desired amount of more or less compressed crop material, loading vehicle 3 is removed from loading shifter 2 in a known way and is converted, according to actually new principles, into a carriage, which can be pulled by a tractor, which transports the loading vehicle to a receiving station or the like, in which dosage device 60 is placed. Doors 14 are now opened and loading vehicle 3 is backed backwards and docked with dosage device 60, Figure 7. Hydraulic oil is fed into the plus chamber of cylinders 30-31 via connection tube 43 in the same way as when the compression stroke is made. Sledge 19, 119 and consequently wall 18, 118 is then fed with a regular speed backwards against discharge opening 15. The compressed crop material constitutes a body, which is more or less continuous depending on the properties of the material and the degree of compression. Gradually this crop material body is pushed out of discharge opening 15 into space 75 in input portion 65 of dosage device 60. In case the embodiment according to Figure 11 is used, the final discharge of the material is accomplished by turning wall 122 upwards to a position 122'. Crop material 70 falls on input conveyor 66 and is fed upwards/inwards by means of the same. Lateral walls 67 and doors 69 prevent crop material 70 from falling outwards in a lateral direction from the device. The figures show that input conveyor 66 with its lower portion 66A is projected below container 4 at a level, which is substantially below bottom 10 of the container. In this way it is avoided that the crop material also is lost in a forward direction below loading vehicle 3. The figures also show that container 4 has been backed into a position between doors 69.

Input conveyor 66 is inclined about 35° upwards/inwards towards the interior of dosage device 60. Crop material 70, which is fed out of container 4 by means of movable wall 18, gradually falls into the second transverse conveyor 74. The first conveyor, i.e. input conveyor 66, is able to deliver a volume-calculated material flow to the other conveyor 74 by means of stripper 82, which in a way known per se is mounted at a certain distance above input conveyor 66 in the upper portion of space 75 in input portion 65. Stripper 82 is a known construction in the form of a rotating reel with pins, the rotation shaft of which is parallell with the shafts of the input conveyor. Stripper 82 rotates in the opposite direction in relation to the feeding direction of input conveyor 66, as is shown by the arrows.

In case input conveyor 66 would not be able to run as fast as the discharge device of container 3, i.e. movable wall 18, 118, then space 75 would be increasingly filled with crop material. In case space 75 would be filled to such a degree, that the discharged crop material would contact a level guard 83, disposed in space 75 between discharge opening 15 of container 3 and stripper 82, the feeding of movable wall 18,118 would be stopped or its feeding speed would be lowered by choking the hydraulic flow to hydraulic cylinders 30-33. This can be done manually by a signal sent from level guard 83, so that an operator will be alerted, who interrupts or slows down the feeding of wall 18, 118. Preferably, however, this is done by designing level guard 83 in such a way, that it directly controls the feeding of hydraulic cylinders 30-33. Level guard 83 can be a device known per se in the form of a propeller or some rotating device, the rotation of which is stopped in case crop material 70 reaches and contacts the rotating device. Level guard 83 is disposed at a level above bottom 10 of container 4 and roughly at the same level as the lower portion of stripper 82.

Material, which has been delivered from input conveyor 66, is recieved by second conveyor 74, which delivers it to fan 76. While the crop material is transported by said second conveyor between input portion 65 and fan 76, it receives a volume-calculated chemical from powder feeder 77, which chemical e.g. can be a preservative having a crystalline phase. Since it is possible to volume fill the chemicals from powder feeder 77 as well as volume fill crop material 70 from input portion 65, all desired mixtures can be obtained, while at the same time conditions for fan 76 to work optimally are obtained. Finally, by means of fan 76 the crop material and the admixed chemical are blown into storing facility 81. Figure 7 shows that the crop material is blown out horizontally from dosage device 60. Also, fan 76 can be turned upwards, as is shown in Figure 9, in order to blow the material up into a silo or any high storing device.

## Claims

1. An equipment for handling a crop material, said equipment includes two separate mobile units (3, 60), namely a loading vehicle (3) having a container (4) for the crop material (70) and a mobile device (60) for dosage of chemicals or other additives to the crop material, that said two units (3, 60) are designed in such a way, that they can be docked to each other, to an integrated treatment unit, which is stationary as long as the two units (3, 60) are docked to one another, one of the gables of the container (4) being turned to the dosage device (60), that the container (4) can be opened in said gable, so that a discharge opening (15) in the gable is formed, the equipment is provided with a discharge device (18, 118) designed to discharge the crop material through said discharge opening, the dosage device (60) is provided with an input portion (65), which is turned to the docked container (4) and includes a first conveyor (66) for the crop material (70) discharged from the container (4), the input portion of the dosage device (60) has at least two lateral walls (67, 69), the container (4), when docked to the dosage device (60), said lateral walls (67, 69) as well as said first conveyor (66), define a space (75) between the container (4) and the first conveyor (66), which space (75) is closed, at least laterally, and has a bottom, which consists of said first conveyor (66), that a stripper (82) for the crop material, which is fed upwards by the first conveyor, is disposed in the upper portion of said space (75) at a distance from the conveyor, so that the input portion (65) feeds a regular volume flow of crop material into the dosage device (60), a level guard (83) is disposed in this space between the container and the stripper (82) and the level guard (83) is designed to send a signal or to automatically control the discharge device (18, 118), so that the same is stopped or gets a slower working speed, in case the space (75) between the container (4) and the first conveyor (66) of the dosage device is filled with such a large amount of crop material, that the level guard reacts.

2. An equipment according to claim 1, **characterized** in that the input portion of the dosage device (60) and said first conveyor roughly have the same width as the container.

3. An equipment according to claim 1 or 2, **characterized** in that the discharge device of the container includes a movable wall (18, 118), which extends between the longitudinal walls (11) of the container and from the bottom (10) of the container up to a level, which corresponds to at least the main part of the total interior height of the container, that displacement devices (30-33) are disposed to move the movable wall from a front end position backwards towards the discharge opening (15) in order to feed all the volume of crop material present in the container backwards towards the discharge opening, so that the crop material gradually is forced to leave the container as a more or less continuous body, that said first conveyor (66) in the dosage device is extended from a lower level, which is lower than the bottom (10) of the container, up to an upper level, which is substantially higher than the bottom of the container, and that the level guard (83) is placed on a level between the bottom and the ceiling of the container.

4. An equipment according to any of claims 1-3, **characterized** in that the lateral walls (67, 69) are disposed at a distance from each other, which is somewhat larger than the exterior width of the container, and that the input portion also has a roof at a level, which is somewhat higher than the level of the roof of the container in order to facilitate the docking of the container with the dosage device.

5. An equipment according to any of claims 1-4, **characterized** in that the first conveyor (66) is an endless conveyor having roughly the same width as the container, which conveyor belt slants upwards and inwards into the dosage device (60).

6. An equipment according to any of claims 1-5, **characterized** in that the crop material, which is volume filled by a cooperation between the discharge device (18, 30-33) of the container, the first conveyor (66) of the dosage device, the level guard (83) and the stripper (82), is delivered on a second conveyor (74) and that dosage devices (77, 78) are mounted to admix one or several chemicals to the crop material, which has been delivered onto and which is fed by the second conveyor (74).

7. An equipment according to claim 6, **characterized** in that the second conveyor is connected to a fan (76) in order to transport the treated crop material out of the integrated equipment.

## Ansprüche

1. Einrichtung zur Handhabung von Erntegut, mit zwei gesonderten fahrbaren Einheiten (3, 60), und zwar einem Ladefahrzeug (3) mit einem Behälter (4) für das Erntegut (70) und einer fahrbaren Vorrichtung (60) zur Dosierung von Chemikalien oder sonstigen Zusatzstoffen zum Erntegut, wobei die beiden Einheiten (3, 60) so ausgelegt sind, daß sie aneinanderkoppelbar sind zur Bildung einer integrierten Behandlungseinheit, die ortsfest ist, solange die beiden Einheiten (3, 60) aneinandergekoppelt sind, wobei einer der Giebel des Behälters (4) der Dosiereinheit (60) zugewandt ist und der Behälter (4) in dem Giebel geöffnet werden kann, so daß in dem Giebel eine Austragöffnung (15) gebildet ist, wobei die Einrichtung mit einer Austragvorrichtung (18, 118) versehen ist, die das Erntegut durch die Austragöffnung austrägt, die Dosiervorrichtung (60) mit einem Einlaufteil (65) versehen ist, der dem angekoppelten Behälter (4) zugewandt ist und einen ersten Förderer (66) für das aus dem Behälter (4) auszutragende Erntegut (70) hat, wobei der Einlaufteil der Dosiervorrichtung (60) wenigstens zwei Seitenwände (67, 69) hat und wobei der Behälter (4) im an die Dosiervorrichtung (60) angekoppelten Zustand, die Seitenwände (67, 69) sowie der erste Förderer (66) einen Raum (75) zwischen dem Behälter (4) und dem ersten Förderer (66) definieren, der wenigstens seitlich geschlossen ist und einen Boden aufweist, der aus dem ersten Förderer (66) besteht, wobei ferner eine Abstreifvorrichtung (82) für das vom ersten Förderer aufwärts geförderte Erntegut im oberen Teil dieses Raums (75) in einem Abstand vom Förderer angeordnet ist, so daß der Einlaufteil (65) einen regelmäßigen Volumenstrom von Erntegut in die Dosiervorrichtung (60) fördert, wobei in diesem Raum zwischen dem Behälter und der Abstreifvorrichtung (82) ein Pegelwächter (83) angeordnet ist, der so ausgelegt ist, daß er ein Signal abgibt oder die Austragvorrichtung (18, 118) automatisch so steuert, daß sie angehalten wird oder ihre Arbeitsgeschwindigkeit verlangsamt, wenn der Raum (75) zwischen dem Behälter (4) und dem ersten Förderer (66) der Dosiervorrichtung mit einer solchen Erntegutmenge gefüllt ist, daß der Pegelwächter ausgelöst wird.

2. Einrichtung nach Anspruch 1, **dadurch gekennzeichnet**, daß der Einlaufteil der Dosiervorrichtung (60) und der erste Förderer ungefähr gleiche Breite wie der Behälter haben.

3. Einrichtung nach Anspruch 1 oder 2, **dadurch gekennzeichnet**, daß die Austragvorrichtung des Behälters eine bewegliche Wand (18, 118) hat, die zwischen den Längswänden (11) des Behälters und vom Boden (10) des Behälters aufwärts bis zu einer Höhe verläuft, die wenigstens dem Hauptteil der Gesamtinnenhöhe des Behälters entspricht, daß Verlagerungsvorrichtungen (30-33) so angeordnet sind, daß sie die bewegliche Wand von einer am Vorderende befindlichen Position rückwärts zur Austragöffnung (15) hin verschieben, um das gesamte im Behälter befindliche Erntegutvolumen rückwärts zur Austragöffnung zu fördern, so daß das Erntegut allmählich als ein mehr oder weniger kontinuierlicher Körper zum Verlassen des Behälters gezwungen wird, daß der erste Förderer (66) in der Dosiervorrichtung von einem unteren Niveau, das niedriger als der Boden (10) des Behälters liegt, aufwärts zu einem oberen Niveau verläuft, das erheblich höher als der Boden des Behälters liegt, und daß der Pegelwächter (83) auf einem Niveau zwischen dem Boden und der Decke des Behälters liegt.

4. Einrichtung nach einem der Ansprüche 1-3, **dadurch gekennzeichnet**, daß die Seitenwände (67, 69) in einem Abstand voneinander angeordnet sind, der etwas größer als die äußere Breite des Behälters ist, und daß der Einlaufteil ebenfalls ein Dach auf einem Niveau hat, das etwas höher als das Niveau des Behälterdachs ist, um das Ankoppeln des Behälters an die Dosiervorrichtung zu erleichtern.

5. Einrichtung nach einem der Ansprüche 1-4, **dadurch gekennzeichnet**, daß der erste Förderer (66) ein Endlosförderer mit ungefähr der gleichen Breite wie der Behälter ist, wobei das Förderband schräg aufwärts und nach innen in die Dosiervorrichtung (60) verläuft.

6. Einrichtung nach einem der Ansprüche 1-5, **dadurch gekennzeichnet,** daß das Erntegut, das durch Zusammenwirken zwischen der Austragvorrichtung (18, 30-33) des Behälters, dem ersten Förderer (66) der Dosiervorrichtung, dem Pegelwächter (83) und der Abstreifvorrichtung (82) volumenmäßig eingefüllt wird, einem zweiten Förderer (74) zugeführt wird, und daß Dosiereinheiten (77, 78) angeordnet sind, die dem Erntegut, das auf den zweiten Förderer verbracht und vom zweiten Förderer (74) gefördert wird, eine oder mehrere Chemikalien beimischen.

7. Einrichtung nach Anspruch 6, **dadurch gekennzeichnet,** daß der zweite Förderer mit einem Gebläse (76) verbunden ist, um das behandelte Erntegut aus der integrierten Einrichtung abzutransportieren.

## Revendications

1. Equipement pour la manipulation du produit d'une récolte, ledit équipement comprenant deux ensembles mobiles séparés (3, 60) c'est-à-dire un véhicule de collecte (3) qui comporte un réceptacle (4) pour le produit récolté (70) et un dispositif mobile (60) pour l'administration au produit récolté de produits chimiques ou d'autres additifs, lesdits deux ensembles (3, 60) étant destinés à pouvoir être arrimés ensemble à une unité de traitement intégrée, laquelle est stationnaire tant que les deux ensembles (3, 60) sont arrimés l'un à l'autre, l'une des parois de pignon du réceptacle (4) étant tournée vers le dispositif d'administration (60), cette paroi de pignon du réceptacle (4) pouvant être ouverte de façon à former dans cette paroi une ouverture de déversement (15), l'équipement comportant un dispositif de déversement (18, 118) conçu pour décharger par l'ouverture de déversement le produit récolté, le dispositif d'administration (60) présentant une partie d'entrée (65) qui est tournée vers le réceptacle arrimé (4) et comprend un premier transporteur (66) pour le produit récolté déversé depuis le réceptacle (4), la partie d'entrée du dispositif d'administration (60) ayant au moins deux parois latérales (67, 69), le réceptacle (4) lorsqu'il est arrimé au dispositif d'administration (60), lesdites parois latérales (67, 69) ainsi que ledit premier transporteur (66) définissant entre le réceptacle (4) et le premier transporteur (66) un espace (75) qui est fermé au moins latéralement et présente un fond constitué par le premier transporteur (66), un régulateur (82) pour le produit récolté étant alimenté vers le haut par le premier transporteur et étant disposé à la partie supérieure dudit espace (75) à une distance du transporteur telle que la partie d'entrée (65) alimente le dispositif d'administration (60) d'un flux à volume régulier de produit récolté, un protecteur de niveau (83) étant disposé à l'intérieur de cet espace entre le réceptacle et le régulateur (82) et ce protecteur de niveau (83) étant conçu pour émettre un signal ou pour commander automatiquement le dispositif de déversement (18, 118) de façon que celui-ci soit arrêté ou ait sa vitesse de travail réduite dans le cas où l'espace (75) entre le réceptacle (4) et le premier transporteur (66) du dispositif d'administration est rempli d'une quantité telle de produit récolté que cela provoque la réaction du protecteur de niveau.

2. Equipement selon la revendication 1, caractérisé en ce que la partie d'entrée du dispositif d'administration (60) et le premier transporteur ont pratiquement la même largeur que le réceptacle.

3. Equipement selon la revendication 1 ou 2, caractérisé en ce que le dispositif de déversement du réceptacle comprend une paroi mobile (18, 118) qui s'étend entre les parois longitudinales (11) du réceptacle et depuis le fond (10) du réceptacle jusqu'à un niveau qui correspond au moins à la partie principale de la hauteur intérieure totale du réceptacle, en ce que des dispositifs de déplacement (30-33) sont disposés pour déplacer la paroi mobile vers l'arrière depuis une position extrême avant en direction de l'ouverture de déversement (15) de façon à acheminer vers l'arrière tout le volume de produit récolté présent dans le réceptacle en direction de l'ouverture de déversement, de façon que le produit récolté soit forcé graduellement à quitter le réceptacle sous la forme d'un corps plus ou moins continu, en ce que le dit premier transporteur (66) s'étend à l'intérieur du dispositif d'administration depuis un niveau inférieur plus bas que le fond (10) du réceptacle, jusqu'à un niveau supérieur qui est sensiblement plus haut que le fond du réceptacle, et en ce que le protecteur de niveau (83) est placé à un niveau intermédiaire entre le fond et le plafond du réceptacle.

4. Equipement selon l'une quelconque des revendications 1 à 3, caractérisé en ce que les parois latérales (67, 69) sont disposées à une distance l'une de l'autre qui est un peu supérieure à la largeur extérieure du réceptacle, et en ce que la partie d'entrée présente aussi un toit à un niveau qui est un peu supérieur à celui du toit du réceptacle de façon à faciliter l'arrimage du réceptacle au dispositif d'administration.

5. Equipement selon l'une quelconque des revendications 1 à 4, caractérisé en ce que le premier transporteur (66) est un transporteur sans fin ayant pratiquement la même largeur que le réceptacle, dont la courroie de transporteur est inclinée vers le haut et vers l'intérieur dans le dispositif d'administration (60).

6. Equipement selon l'une quelconque des revendications 1 à 5, caractérisé en ce que le produit récolté dont le remplissage en volume s'effectue par coopération entre le dispositif de déversement (18, 30-33) du réceptacle, le premier transporteur (66) du dispositif d'administration, le protecteur de niveau (83) et le régulateur (82), est délivré sur un second transporteur (74), et en ce que des dispositifs d'administration (77, 78) sont montés pour mélanger un ou plusieurs produits chimiques au produit récolté qui a été amené sur le second transporteur (74) et qui est acheminé par celui-ci.

7. Equipement selon la revendication 6, caractérisé en ce que le second transporteur est relié à un ventilateur (76) pour acheminer le produit récolté traité hors de l'équipement intégré.

Fig.1.

EP 0 294 383 B1

Fig. 2.

Fig.3.

# Fig.4.

EP 0 294 383 B1

Fig.5.

# Fig.6.

Fig.7.

Fig.8.

Fig.9.

Fig.10.

Fig. 11